# EUROPÄISCHE PATENTANMELDUNG

(11) **EP 4 044 310 A1**
(43) Veröffentlichungstag der Anmeldung: **17.08.2022**
(21) Anmeldenummer: 22151352.6
(22) Anmeldetag: 13.01.2022
(51) Int. Cl.: H01M 10/0562

(54) **FESTKÖRPERELEKTROLYT FÜR EINE ELEKTRODENSCHICHT EINER FESTKÖRPERBATTERIE**

(30) Priorität: 10.02.2021 DE 102021201239
(71) Anmelder: VOLKSWAGEN AG, 38440 Wolfsburg (DE)
(72) Erfinder: ZHANG, Wenbo, 38547 Calberlah (DE)
(74) Vertreter: FDST Patentanwälte

(57) **Zusammenfassung**

Die Erfindung betrifft einen Festkörperelektrolyt (14') für eine Elektrodenschicht (10) einer Festkörperbatterie (2), aufweisend einen Kern (20) aus einem Kernmaterial und eine den Kern (20) umgebende Oberflächenschicht (22) aus einem Oberflächenmaterial, wobei das Kernmaterial eine kristalline Struktur und das Oberflächenmaterial eine amorphe Struktur aufweist, und wobei das Kernmaterial und das Oberflächenmaterial die gleiche chemische Zusammensetzung aufweisen.

## Beschreibung

Die Erfindung betrifft einen Festkörperelektrolyt für eine Elektrodenschicht einer Festkörperbatterie. Die Erfindung betrifft weiterhin eine Elektrodenschicht und ein Verfahren zur Herstellung einer solchen Elektrodenschicht sowie eine Festkörperbatterie.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt. Zur Erzeugung oder Bereitstellung einer ausreichend hohen Betriebsspannung weisen solche Fahrzeugbatterien typischerweise mindestens ein Batteriezellmodul auf, bei welchem mehrere einzelne Batteriezellen modular verschaltet sind.

Die Batteriezellen sind beispielsweise als elektrochemische (Dünn-)Schichtzellen ausgeführt. Die Dünnschichtzellen weisen einen geschichteten Aufbau mit einer Kathodenschicht (Kathode) und mit einer Anodenschicht (Anode) sowie mit einer dazwischen eingebrachten Separatorschicht (Separator) auf. Diese Bestandteile werden beispielsweise von einem flüssigen Elektrolyten (Flüssigelektrolyt) durchdrungen, welcher eine ionenleitfähige Verbindung der Bestandteile beziehungsweise einen Ladungsausgleich erzeugt. In der Regel sind hierbei mehrere Schichtzellen als ein Zellenstapel übereinander gestapelt angeordnet.

Schichtzellen mit einem Festkörperelektrolyten (Festelektrolyt, FE), nachfolgend auch als Festkörperzellen bezeichnet, weisen bei gleichem Baugewicht und/oder Bauvolumen eine höhere Energiespeicherdichte als Schichtzellen mit Flüssigelektrolyten auf. Batterien mit Festkörperzellen sind nachfolgend auch als Festkörperbatterien (FKB) oder Feststoffbatterien bezeichnet. Bei Festkörperzellen ist die Kathode beziehungsweise die Kathodenschicht in der Regel als eine sogenannte Kompositkathode aus einem Festkörper-Polymer-Verbundmaterial, insbesondere einem Festkörperelektrolyt-Verbundmaterial, ausgeführt. Kompositkathoden weisen beispielsweise Kathodenmaterialien, Bindermaterialien, Leitadditive (Kohlenstoffe) und Festkörperelektrolyte (partikelförmig) auf.

Die Festkörperelektrolyte wirken in der Kompositkathode als ein ionisch leitendes Additiv. Zur Verbesserung der elektrischen Eigenschaften ist die Kompositkathode häufig mit Leitpartikeln als zusätzliches Leitadditiv versetzt. Kohlenstoffbasierte Leitpartikel, beispielsweise ein Leitruß oder ein Leitgraphit, sind aufgrund ihrer hohen Leitfähigkeit ein wichtiger Bestandteil von Lithium-lonen-Batterien, welche den Kathodenwiderstand, und somit den Innenwiderstand der Batterie, reduzieren.

Bei Feststoffbatterien ist der Festkörperelektrolyt wichtig für die Sicherheit und Zyklenstabilität der Festkörperzelle beziehungsweise der Batterie. Vorzugsweise weisen Festkörperelektrolyten hierbei eine hohe ionische Leitfähigkeit sowie eine chemische, elektrochemische und mechanische Stabilität auf.

Festkörperelektrolyte mit einer hohen Kristallinität, wie beispielsweise Li₇P₃S₁₁, weisen eine relativ hohe Lithium-Ionen Leitfähigkeit auf. Nachteiligerweise weisen derartig kristalline Festkörperelektrolyte jedoch auch eine reduzierte elektrochemische und mechanische Stabilität auf, welche im Betrieb häufig zu ungewünschten (chemischen) Nebenreaktionen und (mechanischen) Rissbildungen führen kann. Dies kann zu einem Anstieg des (elektrischen) Zellenwiderstands führen, wodurch die Zellzyklen- und Ratenstabilität reduziert wird.

Im Gegensatz zu kristallinen Festkörperelektrolyten weisen amorphe Festelektrolyte, also Festelektrolyte mit niedriger oder im Wesentlichen keiner Kristallinität, höhere elektrochemische und mechanische Stabilität, jedoch niedrigere ionische Leitfähigkeit auf. Daher werden für Festkörperbatterien in der Regel kristalline Festkörperelektrolyten eingesetzt.

Zur Reduzierung der chemischen Nebenreaktionen in der Kompositkathode ist es beispielsweise möglich, die Kompositkathode ohne Leitruß oder kohlenstoffbasierte Leitadditive auszuführen. Dadurch wird jedoch eine Schnellladefähigkeit der Festkörperbatterie nachteilig begrenzt, wodurch der Einsatz in elektrisch angetriebenen oder antreibbaren Kraftfahrzeugen erschwert wird.

Zur Reduzierung der chemischen Nebenreaktionen in der Kompositkathode ist es beispielsweise ebenso möglich, Festkörperelektrolyte mit einer höheren elektrochemischen Stabilität zu verwenden. Häufig sind Festkörperelektrolyte mit einer höheren elektrochemischen Stabilität oxidbasiert, es handelt sich also um Oxidfestelektrolyte. Oxidfestelektrolyte weisen jedoch sehr hohe Elastizitätsmodule (Young's Module) größer 150 GPa (Gigapascal) und einen großen (elektrischen) Kontaktwiderstand oder Übergangswiderstand zwischen dem Oxidfestelektrolyt und einem Lithium-Metall-Oxid als Kathodenmaterial auf, wodurch die Anwendung in Festkörperbatterien erschwert wird.

Aus der US 2018/0233776 A1 ist ein Festkörperelektrodenmaterial mit einem kristallinen Festkörperelektrolyten mit der Formel Li_{10±1}AB₂X₁₂, und mit einem amorphen Festkörperelektrolyten mit der Formel yLi₂X'-(100-y)P₂X'₅ bekannt. Die Komponente A ist hierbei Si, Ge, Sn, B, oder AI, wobei die Komponente B entweder P oder As ist. Die Komponenten X und X' sind aus O, S oder Se ausgewählt, wobei der Faktor y eine Ganzzahl zwischen 65 und 85 ist. Der kristalline Festkörperelektrolyt ist hierbei mit dem amorphen Festkörperelektrolyten beschichtet, wodurch Nebenreaktionen und Rissbildungen in dem Festkörperelektrodenmaterial reduziert werden.

Der Erfindung liegt die Aufgabe zugrunde, einen besonders geeigneten Festkörperelektrolyten anzugeben. Insbesondere soll ein möglichst kostengünstiger und einfach herstellbarer Festkörperelektrolyt angegeben werden. Der Erfindung liegt weiterhin die Aufgabe zugrunde, eine besonders geeignete Elektrodenschicht und ein besonders geeignetes Verfahren zur Herstellung einer solchen Elektrodenschicht sowie eine besonders geeignete Festkörperbatterie anzugeben.

Hinsichtlich des Festkörperelektrolyten wird die Aufgabe mit den Merkmalen des Anspruchs 1 und hinsichtlich der Elektrodenschicht mit den Merkmalen des Anspruchs 6 sowie hinsichtlich des Verfahrens mit den Merkmalen des Anspruchs 7 und hinsichtlich der Festkörperbatterie mit den Merkmalen des Anspruchs 10 erfindungsgemäß gelöst. Vorteilhafte Ausgestaltungen und Weiterbildungen sind Gegenstand der Unteransprüche.

Der erfindungsgemäße Festkörperelektrolyt ist für eine Elektrodenschicht, insbesondere für eine Kompositkathode, einer Festkörperbatterie vorgesehen, sowie dafür geeignet und eingerichtet. Der Festkörperelektrolyt weist einen Kern (Kernfestkörperelektrolyt) aus einem Kernmaterial und eine den Kern umgebende Oberflächenschicht (Oberflächenfestelektrolyt) aus einem Oberflächenmaterial auf. Mit anderen Worten weist der Festkörperelektrolyt ein Core-Shell-System auf. Das Kernmaterial weist eine kristalline (Festkörper-)Struktur auf. Dies bedeutet, dass das Kernmaterial ein Kristallgitter aufweist. Das Oberflächenmaterial weist hierbei eine amorphe (Festkörper-)Struktur, also eine unregelmäßige Struktur ohne makroskopische Ordnung, auf. Erfindungsgemäß weisen das Kernmaterial und das Oberflächenmaterial die gleiche chemische Zusammensetzung auf. Mit anderen Worten weisen das Kernmaterial (Core) und das Oberflächenmaterial (Shell) die gleiche Stöchiometrie auf, unterscheiden sich jedoch hinsichtlich einer Kristallinität. Dadurch ist ein besonders geeigneter Festkörperelektrolyt realisiert.

Erfindungsgemäß weist der Festkörperelektrolyt somit ein zwei Schichtmaterial auf, wobei die Schichten (Kern-Oberfläche) dieselbe Stöchiometrie aber unterschiedliche Eigenschaften haben. Es wird also kein zweites Material unterschiedlicher Stöchiometrie benötigt, wodurch Prozesskosten und Materialkosten reduziert werden. Der erfindungsgemäße oberflächenamorphe Festköperelektrolyt weist die kombinierten Vorteile eines kristallinen Festkörperelektrolyts (hohe ionische Leitfähigkeit) und eines amorphen Festkörperelektrolyts (hohe elektrochemische und mechanische Stabilität) auf. Da sich die Strukturen der Materialien lediglich hinsichtlich der Kristallinität unterscheiden, weisen der Kern und die Oberflächenschicht einen verbesserten Kontakt zueinander auf, wodurch ein besonders geringer Kontakt- oder Übergangswiderstand zwischen den Materialien gewährleistet ist.

Das Kernmaterial und das Oberflächenmaterial sind aus dem gleichen Festkörperelektrolytmaterial hergestellt. Vorzugsweise ist die Oberfläche des Kernmaterials hierbei durch Amorphisierung zu der Oberflächenschicht modifiziert. Mit anderen Worten wird das Kernmaterial an seiner Oberfläche derart bearbeitet oder behandelt, dass das Kernmaterial an der Oberfläche zu dem Oberflächenmaterial amorphisiert. Das Oberflächenmaterial ist also ein amorphisiertes oder modifiziertes Kernmaterial. Zur Herstellung des Festkörperelektrolyten wird also die Kristallstruktur an der Oberfläche des Kernmaterials in eine amorphe Struktur überführt.

Erfindungsgemäß handelt es sich bei der Oberflächenschicht somit nicht um eine Beschichtung oder ein Coating. Die Oberflächenschicht wird als eine amorphe Schicht auf der Oberfläche des kristallinen Kerns gestaltet, die Oberflächenschicht wird also direkt von dem kristallinen Kernmaterial umgewandelt. Dadurch ist eine besonders einfache und aufwandreduzierte Herstellung des Festkörperelektrolyt ohne ein Beschichtungsverfahren realisiert. Des Weiteren ist ein besonders kostengünstiger Festkörperelektrolyt realisiert, da keine zusätzlichen Materialien benötigt werden, sondern lediglich der Kern an der Oberfläche amorphisiert wird.

Um die Oberfläche des Kerns amorph zu modifizieren, können unterschiedliche Methode eingesetzt werden, zum Beispiel mechanische Methoden wie Kugelmühlen, physikalische Methoden wie beispielsweise ein Ultraschallprozess, sowie chemische oder elektrochemische Methoden. Die ionische Leitfähigkeit des Kernfestkörperelektrolyts wird durch die Behandlung oder Bearbeitung der Oberfläche vorzugsweise nicht beeinflusst.

Vorzugsweise ist der Festkörperelektrolyt pulverförmig. Mit anderen Worten handelt es sich um ein Festkörperelektolytpulver mit amorpher Oberfläche. Dies bedeutet, dass eine Vielzahl von oberflächenmodifizierten Kernen vorliegt. Dadurch wird die Oberfläche vergrößert, also der relative Anteil der Oberflächenschicht zum Kern, wodurch eine besonders hohe elektrochemische und mechanische Stabilität gewährleistet wird.

In einer geeigneten Ausführung weisen das das Kernmaterial und das Oberflächenmaterial eine elektrische Leitfähigkeit größer 10⁻¹³ S/cm (Siemens pro Zentimeter) auf. Dadurch wird die Anwendung als ionisch leitendes Additiv in einer Kompositkathode verbessert.

In einer zweckmäßigen Ausgestaltung weist die Oberflächenschicht eine Schichtdicke zwischen 100 nm (Nanometer) und 1000 nm auf. Dadurch ist eine hohe elektrochemische und mechanische Stabilität sichergestellt. Die Kerne weisen hierbei insbesondere einen Durchmesser im Mikrometerbereich, beispielsweise zwischen 1 µm (Mikrometer) und 10 µm, auf. Dies bedeutet, dass der Durchmesser der Kerne insbesondere eine Größenordnung oder einen Faktor Zehn (10) größer als die Schichtdicke ist.

In einer vorteilhaften Weiterbildung weist die Oberflächenschicht eine Bruchzähigkeit oder Riss-zähigkeit (Risswiderstand) größer als 1 MPa m^{1/2} (Megapascal Wurzel Meter) auf. Dadurch ist ein besonders hoher Widerstand der Oberflächenschicht gegen Rissinitiierung gegeben, so dass Rissbildungen zuverlässig vermieden werden.

In einer möglichen Ausführung sind das Kernmaterial und das Oberflächenmaterial aus einem Sulfidelektrolyt oder aus einem Oxidelektrolyt hergestellt. Geeignete Festkörperelektrolytmaterialien sind beispielsweise Li₇P₃S₁₁, ß-Li₃PS₄, Li₁₀GeP₂S₁₂, Li₃InCl₆, Li₃InBr₆, Li₇La₃Zr₂O₁₂, Li_{0.33}La_{0.57}TiO₃, usw. Nach der Oberflächenbehandlung, kann hierbei eine amorphe Schicht auf der Oberfläche des Kerns gestaltet werden, welche beispielsweise eine Stöchiometrie von 70Li₂S-30P₂S₅ oder 75Li₂S-25P₂S₅, LiCl oder LiZrO₂ aufweist.

Die erfindungsgemäße Elektrodenschicht ist für eine Festkörperbatterie vorgesehen, sowie dafür geeignet und eingerichtet. Die Elektrodenschicht ist vorzugsweise als eine Kompositkathode, also als eine Kathodenschicht aus einem Verbundmaterial, ausgeführt. Die Elektrodenschicht beziehungsweise das Verbundmaterial weisen hierbei ein Elektrodenmaterial oder Kathodenmaterial und einen vorstehend beschriebenen Festkörperelektrolyt auf. Der modifizierte Festelektrolyt wirkt hierbei als ein ionisch leitendes Additiv in der Elektrodenschicht oder Kompositkathode. Des Weiteren kann dem Verbundmaterial zusätzlich zu dem Festelektrolyten ein Leitadditiv, insbesondere kohlenstoffbasierte Leitpartikel, beigesetzt sein. Die im Hinblick auf den Festkörperelektrolyten angeführten Vorteile und Ausgestaltungen sind sinngemäß auch auf die Elektrodenschicht übertragbar und umgekehrt. Durch die Modifikation der Oberfläche des kristallinen Kerns werden Nebenreaktionen und Rissbildungen im Betrieb der Elektrodenschicht vermieden, wodurch die Zyklenstabilität verbessert wird. Dadurch ist eine besonders geeignete Elektrodenschicht für eine Festkörperbatterie realisiert.

Vorzugsweise wird die Oberfläche des Kerns des Festkörperelektrolyten vor dem Einbringen in das Verbundmaterial modifiziert oder amorphisiert. Alternativ ist es gemäß dem erfindungsgemäßen Herstellungsverfahren für die Elektrodenschicht ebenso möglich, dass ein Elektrodenmaterial und ein pulverförmiges Kernmaterial vermischt werden, wobei die Oberfläche des Kernmaterials in-situ zu der Oberflächenschicht amorphisiert wird. Dies bedeutet, dass der erfindungsgemäße Festkörperelektrolyt in-situ im Zuge der Elektrodenschichtherstellung erzeugt wird. Dabei gelten die Ausführungen im Zusammenhang mit dem Festkörperelektrolyten und/oder der Elektrodenschicht sinngemäß auch für das Verfahren und umgekehrt.

Dies bedeutet, dass beispielsweise eine Kompositkathode aus Festkörperelektrolyten (kristallin und unmodifiziert), Elektrodenmaterial und Leitadditiv (wie Leitruß), mit entweder trockenem oder nassem Verfahren hergestellt wird, wobei bei einem trockenen Verfahren ein mechanischer Druck auf das Verbundmaterial ausgeübt werden kann. Anschließend, wird die Oberfläche von dem kristallinen Kern in-situ amorphisiert. Zur Amorphisierung der Kerne wird vorzugsweise eine chemische Methode oder elektrochemische Methode verwendet.

Die erfindungsgemäße Festkörperbatterie weist eine vorstehend beschriebene Elektrodenschicht, vorzugsweise in Form einer Kompositkathode, auf. Die im Hinblick auf den Festkörperelektrolyt und/oder die Elektrodenschicht und/oder das Verfahren angeführten Vorteile und Ausgestaltungen sind sinngemäß auch auf die Festkörperbatterie übertragbar und umgekehrt. Dies bedeutet, dass die Festkörperbatterie einen oberflächenamorphen Festkörperelektrolyten aufweist. Aufgrund der Modifikation der Oberfläche des kristallinen Kernfestkörperelektrolyts werden Nebenreaktionen und Rissbildungen beim Zyklen vermieden, wodurch die Performance der Festköperbatterie verbessert wird.

Nachfolgend sind Ausführungsbeispiele der Erfindung anhand einer Zeichnung näher erläutert. Darin zeigen in schematischen und vereinfachten Darstellungen:
- Fig. 1: eine Festkörperbatterie mit einer Kompositkathode als Elektrodenschicht,
- Fig. 2: ausschnittsweise eine Kompositkathode gemäß dem Stand der Technik,
- Fig. 3: einen erfindungsgemäßen Festkörperelektrolyt,
- Fig. 4: ausschnittsweise eine Kompositkathode mit erfindungsgemäßen Festkörperelektrolyten, und
- Fig. 5: ein Verfahren zur Herstellung einer Kompositkathode mit erfindungsgemäßen Festkörperelektrolyten.

Einander entsprechende Teile und Größen sind in allen Figuren stets mit den gleichen Bezugszeichen versehen.

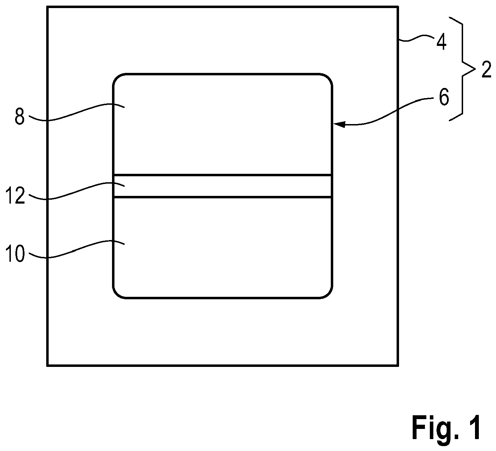

Die in Fig. 1 in schematischer und stark vereinfacht dargestellte Festkörperbatterie 2 weist ein Batteriegehäuse 4 mit mindestens einer darin aufgenommenen Festkörperzelle 6 auf. Die Festkörperzelle 6 weist ein Schichtsystem mit zwei Elektrodenschichten 8, 10 und einer dazwischen angeordneten Separatorschicht 12 auf.

Die Elektrodenschicht 8 bildet die Anode der Festkörperzelle 6, und ist nachfolgend auch als Anodenschicht 8 bezeichnet. Die Anodenschicht 8 ist insbesondere aus Lithium hergestellt. Die Separatorschicht 12 ist aus einem pulverförmigen Festkörperelektrolyten gebildet. Die nachfolgend auch als Kompositkathode bezeichnete Elektrodenschicht 10 ist aus einem Verbundmaterial hergestellt, welchem Festkörperelektrolyte 14 als ionisch leitendes Additiv beigesetzt sind. Der Festkörperelektrolyt 14 der Kompositkathode 10 und der Festkörperelektrolyt der Separatorschicht 12 können aus dem gleichen Material hergestellt sein.

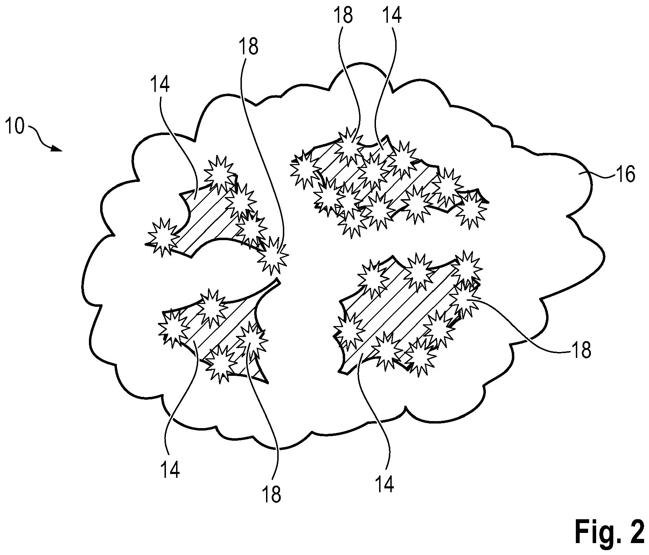

Die Fig. 2 zeigt schematisch den Aufbau einer Kompositkathode 10 gemäß dem Stand der Technik. Das Verbundmaterial der Kompositkathode 10 weist hierbei ein Elektrodenmaterial oder Kathodenmaterial 16 sowie einen damit vermischten pulverförmigen Festkörperelektrolyt 14 auf. Der Festkörperelektrolyt 14 beziehungsweise dessen Material weist hierbei eine hohe Kristallinität auf. Ein solcher kristalliner Festkörperelektrolyt 14 weist jedoch eine reduzierte elektrochemische und mechanische Stabilität auf, welche im Betrieb häufig zu ungewünschten (chemischen) Nebenreaktionen 18 und (mechanischen) Rissbildungen führen kann. Die schematisch dargestellten Nebenreaktionen 18 sind in der Fig. 2 lediglich beispielhaft mit Bezugszeichen versehen.

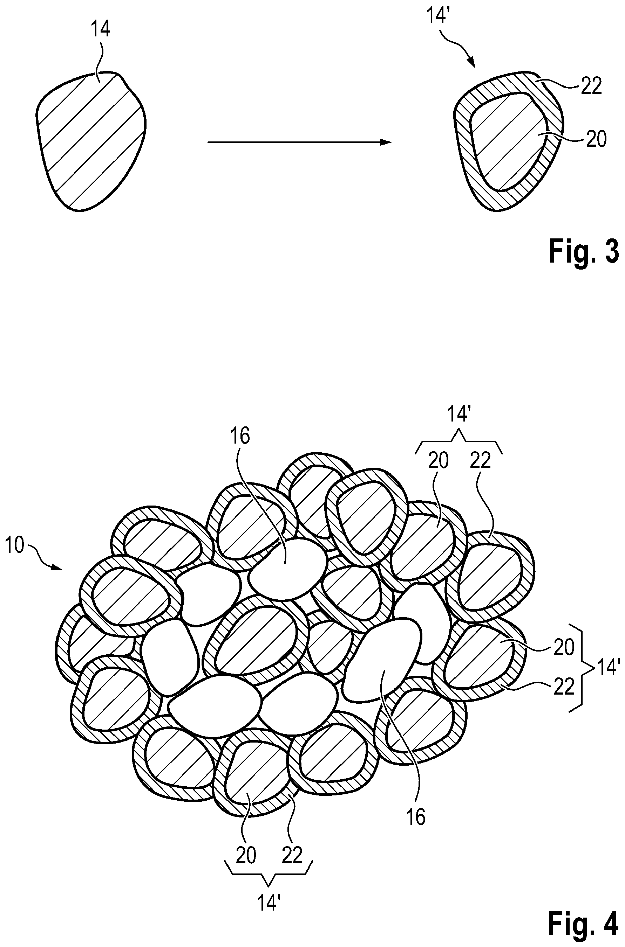

Zur Vermeidung oder Reduzierung der Nebenreaktionen 18 wird die Oberfläche des kristallinen Festkörperelektrolyten 14 erfindungsgemäß modifiziert oder amorphisiert. Dadurch weist der erfindungsgemäße Festkörperelektrolyt 14' einen kristallinen Kern 20 und eine diesen umgebende amorphe Oberflächenschicht 22 auf (Fig. 3). Der kristalline Kern 20 entspricht hierbei im Wesentlichen dem Festkörperelektrolyten 14, wobei die Oberflächenschicht 22 die gleiche chemische Zusammensetzung oder Stöchiometrie, jedoch eine amorphe Struktur mit reduzierter Kristallinität aufweist. Der oberflächenamorphe Festköperelektrolyt 14' weist somit die kombinierten Vorteile eines kristallinen Festkörperelektrolyts (hohe ionische Leitfähigkeit) und eines amorphen Festkörperelektrolyts (hohe elektrochemische und mechanische Stabilität) auf, wodurch die Nebenreaktionen 16 unterdrückt werden (Fig. 4). Der oberflächenamorphe Festkörperelektrolyt 14' weist hierbei eine elektrische Leitfähigkeit größer 10⁻¹³ S/cm auf. Die Oberflächenschicht 22 weist weiterhin eine Bruchzähigkeit oder Riss-zähigkeit größer als 1 MPa m^{1/2} auf.

Die Oberfläche des Kernmaterials wird durch Amorphisierung zu der Oberflächenschicht 22 modifiziert, und die Kristallstruktur an der Oberfläche in eine amorphe Struktur überführt. Diese Amorphisierung erfolgt beispielsweise mittels einer mechanischen Methode wie Kugelmühlen, einer physikalischen Methode wie beispielsweise ein Ultraschallprozess, oder einer chemischen oder elektrochemischen Methode. Geeigneterweise wird hierbei eine Oberflächenschicht 22 mit eine Schichtdicke zwischen 100 nm und 1000 nm hergestellt.

Der Festkörperelektrolyt 14' ist beispielsweise aus einem Sulfidelektrolyt oder aus einem Oxidelektrolyt hergestellt. Geeignete Festkörperelektrolytmaterialien sind beispielsweise Li₇P₃S₁₁, ß-Li₃PS₄, Li₁₀GeP₂S₁₂, Li₃InCl₆, Li₃InBr₆, Li₇La₃Zr₂O₁₂, Li_{0.33}La_{0.57}TiO₃.

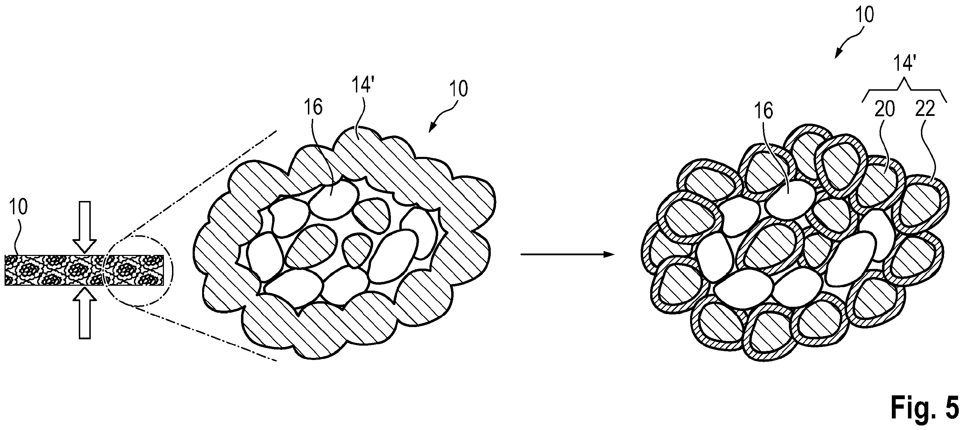

Vorzugsweise wird der pulverförmige Festkörperelektrolyt 14' vor der Herstellung der Kompositkathode hergestellt. Dadurch wird verhindert, dass sich die Behandlung des Festkörperelektrolyten 14' zur Oberflächenamorphisierung nachteilig auf das Kathodenmaterial 16 ausübt. Alternativ ist es beispielsweise möglich, die Oberfläche des Festkörperelektrolyten 14' in-situ während der Kompositkathodenherstellung zu amorphisieren. Ein entsprechendes erfindungsgemäßes Verfahren ist in der Fig. 5 gezeigt.

Verfahrensgemäß wird hierbei die Kompositkathode 10 zunächst aus kristallinen und unmodifizierten Festkörperelektrolyten und dem Kathodenmaterial 16 sowie gegebenenfalls weiteren Leitadditiven in einem trocknen Verfahren hergestellt. Im Zuge des trockenen Verfahrens wird ein mit Pfeilen dargestellter mechanischer Druck auf das Verbundmaterial der Kompositkathode 10 ausgeübt. Anschließend, wird die Oberfläche von dem kristallinen Festkörperelektrolyten 14' in-situ mittels einer chemischen oder elektrochemischen Methode amorphisiert.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Festkörperbatterie
- 4: Batteriegehäuse
- 6: Festkörperzelle
- 8: Elektrodenschicht, Anodenschicht
- 10: Elektrodenschicht, Kathodenschicht
- 12: Separatorschicht
- 14, 14': Festkörperelektrolyt
- 16: Elektrodenmaterial/Kathodenmaterial
- 18: Nebenreaktion
- 20: Kern
- 22: Oberflächenschicht

## Patentansprüche

1. Festkörperelektrolyt (14') für eine Elektrodenschicht (10) einer Festkörperbatterie (2), aufweisend einen Kern (20) aus einem Kernmaterial und eine den Kern (20) umgebende Oberflächenschicht (22) aus einem Oberflächenmaterial, wobei das Kernmaterial eine kristalline Struktur und das Oberflächenmaterial eine amorphe Struktur aufweist, und wobei das Kernmaterial und das Oberflächenmaterial die gleiche chemische Zusammensetzung aufweisen.

2. Festkörperelektrolyt (14') nach Anspruch 1,
**dadurch gekennzeichnet,**
**dass** das Kernmaterial und das Oberflächenmaterial eine elektrische Leitfähigkeit größer 10⁻¹³ S/cm aufweisen.

3. Festkörperelektrolyt (14') nach Anspruch 1 oder 2,
**dadurch gekennzeichnet,**
**dass** die Oberflächenschicht (22) eine Schichtdicke zwischen 100 nm und 1000 nm aufweist.

4. Festkörperelektrolyt (14') nach einem der Ansprüche 1 bis 3,
**dadurch gekennzeichnet,**
**dass** die Oberflächenschicht (22) eine Bruchzähigkeit größer 1 MPa m^{1/2} aufweist.

5. Festkörperelektrolyt (14') nach einem der Ansprüche 1 bis 4,
**dadurch gekennzeichnet,**
**dass** das Kernmaterial und das Oberflächenmaterial aus einem Sulfidelektrolyt oder aus einem Oxidelektrolyt hergestellt sind.

6. Elektrodenschicht (10) einer Festkörperbatterie (2), aufweisend ein Elektrodenmaterial (16) und einen Festkörperelektrolyt (14') nach einem der Ansprüche 1 bis 5.

7. Verfahren zur Herstellung einer Elektrodenschicht (10) nach Anspruch 6, wobei ein Elektrodenmaterial (16) und ein pulverförmiges Kernmaterial (20) vermischt werden, und wobei eine Oberfläche des Kernmaterials (20) in-situ zu der Oberflächenschicht (22) amorphisiert wird.

8. Verfahren nach Anspruch 7,
**dadurch gekennzeichnet,**
**dass** das Elektrodenmaterial (16) und das Kernmaterial (20) trocken vermischt werden.

9. Verfahren nach Anspruch 7 oder 8,
**dadurch gekennzeichnet,**
**dass** ein mechanischer Druck auf die vermischten Materialien eingewirkt wird.

10. Festkörperbatterie (2) aufweisend eine Elektrodenschicht (10) nach Anspruch 6.
